(19) **Europäisches Patentamt**

**European Patent Office**

**Office européen des brevets**

(11) **EP 1 683 843 A1**

(12) **EUROPEAN PATENT APPLICATION**

(43) Date of publication:
26.07.2006 Bulletin 2006/30

(51) Int Cl.:
*C09D 11/00* (2006.01) *C08F 20/00* (2006.01)

(21) Application number: 06250324.8

(22) Date of filing: 20.01.2006

| | |
|---|---|
| (84) Designated Contracting States:<br>AT BE BG CH CY CZ DE DK EE ES FI FR GB GR<br>HU IE IS IT LI LT LU LV MC NL PL PT RO SE SI<br>SK TR<br>Designated Extension States:<br>AL BA HR MK YU<br><br>(30) Priority: 25.01.2005 US 646740 P<br><br>(71) Applicant: **Rohm and Haas Company**<br>**Philadelphia, PA 19106-2399 (US)** | (72) Inventors:<br>• **Hallden-Abberton, Michael**<br>**Maple Glen**<br>**Pennsylvania 19002 (US)**<br>• **Lein, George Max**<br>**Chalfont**<br>**Pennsylvania 18914 (US)**<br><br>(74) Representative: **Kent, Venetia Katherine et al**<br>**Rohm and Haas (UK) Ltd.**<br>**European Patent Department**<br>**4th Floor, 22 Tudor Street**<br>**London EC4Y 0AY (GB)** |

(54) **Inkjet ink binder and inkjet ink composition**

(57) An inkjet ink binder including an aqueous dispersion of polymer particles, the polymer including as polymerized units from 1 to 20 wt.% ethylenically unsaturated hydrophilic monomer, based on polymer weight, the polymer having a weight average molecular weight of from 1000 to 50,000, and the polymer having a glass transition temperature (Tg) in the range of from -40°C to 120°C, is provided. An inkjet ink including the inkjet ink binder is also provided.

EP 1 683 843 A1

**Description**

This invention relates to a binder composition for inkjet inks and inkjet inks including the binder. In particular, this invention relates to an inkjet ink binder including an aqueous dispersion of polymer particles, the polymer including as polymerized units from 1 to 20 wt.% ethylenically unsaturated hydrophilic monomer, based on polymer weight, the polymer having a weight average molecular weight of from 1000 to 50,000, and the polymer having a glass transition temperature (Tg) in the range of from -40°C to 120°C.

Inkjet ink binders, when incorporated into an inkjet ink, provide wet-rub smear resistance and resistance to smearing by highlighter pens in a variety of ink formulations. Some inkjet ink binders provide wet-rub and smear resistance by using soluble polymer resins that are dissolved in the liquid medium of the inkjet ink. Soluble polymers are limited in the molecular weight that can be used because increased molecular weights result in increased viscosity, which is detrimental to jettability of inkjet inks. Other inkjet ink binders provide wet-rub and smear resistance by using emulsion polymers to introduce higher molecular weight polymers without introducing large increases in viscosity. Until now, disclosures of inkjet inks using emulsion polymers have taught that molecular weight of the polymer is not a critical factor. However, the demand for increased jetting throughput continues to stress the inkjet ink during printing operations, putting greater demands on the design of all of the components of inkjet inks.

US Patent No. 6,716,912 discloses a polymeric binder useful for water-resistant inkjet inks wherein the binder includes an acid component in the range from about 1 to about 10 wt% of the polymer, a Tg in the range from about -20°C to about 25°C, and an average particle diameter in the range from about 250 to about 400nm and a particle size distribution such that essentially all the particles have a diameter in the range from 130 to 450nm. Wet-rub smear of prints formed from these inks or resistance to smearing by highlighter pens was excellent. The molecular weight of the polymeric binder disclosed is not critical, with general ranges of between 10,000 to 2,000,000 Daltons, and preferably 50,000 to 1,000,000 Daltons disclosed.

Accordingly, there is a need for inkjet inks to exhibit good printing properties particularly in terms of improved resistance to wet-rub and highlighter smear, while maintaining acceptable reliability across increasing jetting throughput requirements of an inkjet ink. The inkjet binder of the present invention, when incorporated into inkjet inks, provides such performance.

The present invention provides an inkjet ink binder comprising an aqueous dispersion of polymer particles, said polymer comprising as polymerized units from 1 to 20 wt.% ethylenically unsaturated hydrophilic monomer, based on polymer weight, said polymer having a weight average molecular weight of no more than 50,000 Daltons, and said polymer having a glass transition temperature (Tg) in the range of from -40°C to 120°C. The present invention further provides an inkjet ink comprising (a) an aqueous carrier; (b) a colorant; and (c) a polymeric binder comprising an aqueous dispersion of polymer particles, said polymer comprising as polymerized units from 1 to 20 wt.% ethylenically unsaturated hydrophilic monomer, based on polymer weight, said polymer having a weight average molecular weight of no more than 50,000 Daltons, and said polymer having a glass transition temperature (Tg) in the range of from -40°C to 120°C.

The term "hydrophilic monomer" means a monomer which has a solubility in water, at 20-25 °C on a weight % basis (g monomer soluble per 100g water) of at least 6.0% by weight. Examples of ethylenically unsaturated hydrophilic monomers include, but are not limited to, (meth)acrylic acid, (meth)acrylamide, acrylonitrile, 2-hydroxyethyl (meth)acrylate, mono- and multi- ethylenically unsaturated polyethyleneglycol (meth)acrylates, vinyl alcohol, and derivatives thereof that exhibit a solubility in water of at least 6.0% by weight. The solubility of monomers in water is known. For example, data are available in Polymer Handbook (Second edition, J. Brandrup, E. H. Immergut, Editors, John Wiley & Sons) and also in Merck Index (Eleventh Edition, Merck & Co., Inc. (Rahway, N. J., U.S.A.). Some monomers which meet the solubility requirement for this invention include, but are not limited to:

| Monomer | Solubility in water (%, 25°C) |
|---|---|
| 2-Hydroxyethyl methacrylate | completely soluble |
| Acrylic acid | completely soluble |
| Acrylamide | 20.4 |
| Acrylonitrile | 7.3 |
| Methacrylic Acid | completely soluble |
| Hydroxyethyl acrylate | completely soluble |
| 2,(2-ethoxyethoxy) ethyl acrylate | completely soluble |
| Methacrylamide | 10-20 |
| Itaconic Acid | 9.5 |
| Crotonic Acid | 8.0 |

Preferably polymers of the present invention include, as polymerized units, from 1 to 20 wt%, preferably from 3.5 to 8 wt%, more preferably from 4 to 7 wt%, and most preferably from 3 to 6 wt%, ethylenically unsaturated hydrophilic monomer, based on polymer weight. Most preferably the ethylenically unsaturated hydrophilic monomer is a monoethylenically unsaturated acid monomer. Suitable acid monomers include, for example, acrylic acid, methacrylic acid, crotonic acid, itaconic acid, fumaric acid, maleic acid, monomethyl itaconate, monomethyl fumarate, monobutyl fumarate, sodium vinylsulfonic acid, and acrylamidopropane sulfonic acid. Precursor monomers which form acid monomers before, during, or after polymerization such as maleic anhydride and sodium vinylsulfonates are also included. Preferred acid monomers are carboxylic acid monomers such as methacrylic acid, acrylic acid, and combinations thereof.

The polymer of the inkjet ink binder also includes at least one second copolymerized ethylenically unsaturated monomer such as, for example, (meth)acrylic ester monomers including methyl acrylate, ethyl acrylate, butyl acrylate, 2-ethylhexyl acrylate, decyl acrylate, lauryl acrylate, methyl methacrylate, butyl methacrylate, isodecyl methacrylate, lauryl methacrylate, hydroxyethyl methacrylate, hydroxypropyl methacrylate; (meth)acrylonitrile; (meth)acrylamide; N-substituted (meth)acrylamides; amino-functional and ureido-functional monomers; monomers bearing acetoacetate-functional groups; styrene and substituted styrenes; butadiene; fluoro(meth)acrylates; ethylene, propylene, $\alpha$-olefins such as 1-decene; vinyl acetate, vinyl butyrate and other vinyl esters; and vinyl monomers such as vinyl chloride, vinylidene chloride.

The weight average molecular weight of the polymer of the inkjet ink binder (as measured by gel permeation chromatography(GPC)) is no more than 100,000 Daltons, preferably no more than 50,000 Daltons, and more preferably no more than 30,000 Daltons, all with a preferred lower limit of 1000 Daltons.

The polymer of the inkjet ink binder can contain from 0% to 5%, by weight based on the dry weight of the copolymer, copolymerized multi-ethylenically unsaturated monomers such as, for example, allyl methacrylate, diallyl phthalate, 1,4-butylene glycol dimethacrylate, 1,2-ethylene glycol dimethacrylate, 1,6-hexanediol diacrylate, and divinyl benzene. Preferred is the use of no copolymerized multi-ethylenically unsaturated monomers.

The glass transition temperature ("Tg") of the polymer of the inkjet ink binder is from -40 °C to 120°C, preferably from -35 °C to 100 °C, more preferably from -35 °C to 40 °C, and most preferably from -22 °C to 25 °C. Tgs used herein are those determined by differential scanning calorimetry ("DSC").

The inkjet ink binder is typically prepared by emulsion polymerization. The polymerization techniques used to prepare aqueous emulsion polymers are well known in the art. In the emulsion polymerization process conventional surfactants can be used such as, for example, anionic and/or nonionic emulsifiers such as, for example, alkali metal or ammonium salts of alkyl, aryl, or alkylaryl sulfates, sulfonates or phosphates; alkyl sulfonic acids; sulfosuccinate salts; fatty acids; ethylenically unsaturated surfactant monomers; and ethoxylated alcohols or phenols. The amount of surfactant used is usually 0.1 % to 6% by weight, based on the weight of monomer. Either thermal or redox initiation processes can be used. The reaction temperature is maintained at a temperature lower than 100 °C throughout the course of the reaction unless a pressure reactor is used. Preferred is a reaction temperature between 10 °C and 95 °C, more preferably between 20 °C and 90 °C. The monomer mixture can be added neat or as an emulsion in water. The monomer mixture can be added in one or more additions or continuously, linearly or not, or combinations thereof, over the reaction period that is typically from 60 to 140 minutes.

Conventional free radical initiators can be used such as, for example, hydrogen peroxide, sodium peroxide, potassium peroxide, t-butyl hydroperoxide, cumene hydroperoxide, ammonium and/or alkali metal persulfates, sodium perborate, perphosphoric acid and salts thereof, potassium permanganate, and ammonium or alkali metal salts of peroxydisulfuric acid, typically at a level of 0.01% to 3.0% by weight, based on the weight of total monomer. Redox systems using the same initiators coupled with a suitable reductant such as, for example, sodium sulfoxylate formaldehyde, ascorbic acid, isoascorbic acid, alkali metal and ammonium salts of sulfur-containing acids, such as sodium sulfite, bisulfite, thiosulfate, hydrosulfite, sulfide, hydrosulfide or dithionite, formadinesulfinic acid, hydroxymethanesulfonic acid, acetone bisulfite, amines such as ethanolamine, glycolic acid, glyoxylic acid hydrate, lactic acid, glyceric acid, malic acid, tartaric acid and salts of the preceding acids can be used. Redox reaction catalyzing metal salts of iron, copper, manganese, silver, platinum, vanadium, nickel, chromium, palladium, or cobalt can be used. Chelating agents for the metals can optionally be used.

Chain transfer agents such as, for example, halogen compounds such as tetrabromomethane; allyl compounds; or mercaptans such as alkyl thioglycolates, alkyl mercaptoalkanoates, and $C_4$-$C_{22}$ linear or branched alkyl mercaptans can be used to lower the molecular weight of the formed polymer and/or to provide a different molecular weight distribution than would otherwise have been obtained with any free-radical-generating initiator(s). Chain transfer agent(s) can be added in one or more additions or continuously, linearly or not, over most or all of the entire reaction period or during limited portion(s) of the reaction period. The weight average molecular weight (as measured by gel permeation chromatography(GPC)) is from 1000 to 100,000 Daltons, preferably from 1000 to 50,000 Daltons, and more preferably from 1000 to 30,000 Daltons.

In a preferred embodiment of the present invention the aqueous dispersion of polymer particles is formed by emulsion polymerization in the presence of a neutralizer in the amount of from 15 to 75%, on an equivalents basis, based on the monoethylenically unsaturated acid monomer. By "neutralizer" herein is meant a basic material which is capable of entering into an acid-base reaction with the acid monomer. Suitable neutralizers include, for example, hard bases and soft bases, such as ammonia, sodium hydroxide, potassium carbonate, sodium carbonate, and sodium bicarbonate. Preferably hard bases are used as the neutralizer. The pH of the reaction medium is typically between 5 and 9. In another embodiment, at least half of the polymer (by wt) is formed in the presence of a neutralizer in the amount of from 15 to 75%, on an equivalents basis, based on the monoethylenically unsaturated acid monomer employed in that fraction of the polymerization reaction.

In one embodiment of the present invention the aqueous dispersion of polymer particles can be prepared by a multistage emulsion polymerization process, in which at least two stages differing in composition are polymerized in sequential fashion. Such a process can result in the formation of at least two mutually incompatible polymer compositions, thereby resulting in the formation of at least two phases within the polymer particles. Such particles are composed of two or more phases of various geometries such as, for example, core/shell or core/sheath particles, core/shell particles with shell phases incompletely encapsulating the core, core/shell particles with a multiplicity of cores, and interpenetrating network particles. Each of the stages of the multi-staged emulsion polymer can contain the same monomers, surfactants, chain transfer agents, etc. as disclosed herein-above for the polymer. In the case of a multi-staged polymer particle the Tg for the purpose of this invention is to be calculated by the Fox equation (T.G. Fox, Bull. Am. Physics Soc., Volume 1, Issue No. 3, page 123(1956)) as detailed herein using the overall composition of the emulsion polymer without regard for the number of stages or phases therein, that is, for calculating the Tg of a copolymer of monomers M1 and M2,

$$1/Tg(calc.) = w(M1)/Tg(M1) + w(M2)/Tg(M2)$$

wherein:

Tg(calc.)   is the glass transition temperature calculated for the copolymer
w(M1)       is the weight fraction of monomer M1 in the copolymer
w(M2)       is the weight fraction of monomer M2 in the copolymer
Tg(M1)      is the glass transition temperature of the homopolymer of M1
Tg(M2)      is the glass transition temperature of the homopolymer of M2,

all temperatures being in °K.

The glass transition temperatures of homopolymers may be found, for example, in "Polymer Handbook", edited by J. Brandrup and E.H. Immergut, Interscience Publishers.

Similarly, for a multi-staged polymer particle the amount of acid monomer shall be determined from the overall composition of the emulsion polymer without regard for the number of stages or phases therein. The polymerization techniques used to prepare such multistage emulsion polymers are well known in the art such as, for example, US Patents No. 4,325,856; 4,654,397; and 4,814,373.

The weight average particle diameter of the polymer particles is typically from 100 to 450 nm, preferably from 140 to 400 nm, and more preferably from 200 to 350 nm, as measured by capillary hydrodynamic light scattering ("CHDF"). In a preferred embodiment the volume average particle diameter as measured by dynamic light scattering ("DLS") is at least 35 nm, preferably at least 40 nm, more preferably at least 45 nm, and most preferably at least 55 nm, greater than the weight average particle diameter as measured by CHDF. The particle size distribution can be unimodal, bimodal, or polymodal; a unimodal distribution is preferred.

The inkjet ink of the present invention includes the inkjet ink binder, a liquid medium, preferably predominantly water, and more preferably deionized water, and a colorant, such as a dye, pigment, or combinations thereof, preferably an organic or inorganic pigment. Typically the binder is present at a level of from 0.1 to 10 wt%, preferably from 0.5 to 5 wt%, based on the total weight of the ink. The aqueous carrier can be water, preferably, deionized water. Typically the aqueous carrier is present at from 40 to 95 wt%, preferably from 55 to 80 wt%, and more preferably, from 70 to 80 wt% based on the total weight of the ink.

The inkjet ink typically includes a pigment. As a result of the physical properties of pigments, pigment based ink compositions have a tendency to dry smear, have low resistance to wet-rub and have low highlighter resistance. The term "dry smear," as used herein, means applying abrasive pressure across the printed substrate and measuring any smear created thereby. The term "highlighter resistance," as used herein, means applying abrasive pressure across the printed substrate with a commercially available highlighting marker and measuring any smear created thereby; an example of such marker is Sanford Corp. MAJOR ACCENT brand highlighting markers.

Suitable pigments include, for example, organic pigments such as azo compounds, phthalocyanine pigments, quinacridone pigments, anthraquinone pigments, dioxazine pigments, indigo, carbon black, thioindigo pigments, perynone pigments, perylene pigments, and isoindolene; and inorganic pigments such as titanium dioxide, iron oxide, and metal powders. Typically the amount of colorant used is less than 10 wt%, preferably from 0.5 to 10 wt%, and more preferably from 0.5 to 7%, based on the total weight of the ink. Preferably, the pigment particle size is from 0.05 to 5 microns, more preferably not more than one micron and most preferably not more than 0.3 microns.

The inkjet ink can include a pigment dispersant. Suitable polymeric dispersants are known in the art, for example, in U.S. Patent 5,821,283, U.S. Patent 5,221,334, U.S. Patent 5,712,338, and U.S. Patent 5,714,538. Alternatively, pigment known as a self-dispersed pigment can be used or mixtures of a self-dispersed pigment and a pigment with dispersant. Pigments known as self-dispersed pigments or self-dispersing have been created with a surface modification. Such pigments can be surface modified in a variety of ways including, but not limited to, treatment with alkali salts of hypochlorite, ozone, and diazonium salts of aromatic sulfonic acid additions. These surface modified pigments have the distinct advantage of being self-dispersed in aqueous media and can be used without a corresponding polymeric dispersing agent. The surface modification can be performed on both black and color pigments.

For the purposes of this invention, the polymeric dispersant composition is not critical as long as its use results in a stable and printable ink. Polymeric dispersants are typically used at 0.1 to 5 wt%, based on the total weight of the ink. Pigment dispersions can be made by mixing pigment, dispersant, water, and optional additives and milling in, for example, a horizontal media mill, a vertical media mill, and an attritor mill.

The inkjet ink can also include, for example, humectants, dispersants, penetrants, chelating agents, buffers, biocides, fungicides, bactericides, surfactants, anti-curling agents, anti-bleed agents and surface tension modifiers. Useful humectants include ethylene glycol, 1,3 propanediol, 1,4 butanediol, 1,4 cyclohexanedimethanol, 1,5 pentanediol, 1,2-hexanediol, 1,6 hexanediol, 1,8 octanediol, 1,2 propanediol, 1,2 butanediol, 1,3 butanediol, 2,3 butanediol, diethylene glycol, triethylene glycol, tetraethylene glycol, polyethylene glycol with average molecular weight of 200, 300, 400, 600, 900, 1000, 1500 and 2000, dipropylene glycol, polypropylene glycol with average molecular weight of 425, 725, 1000, and 2000, 2-pyrrolidone, 1-methyl-2-pyrrolidone, 1-methyl-2-piperidone, N-ethylacetamide, N-methylpropionamide, N-acetyl ethanolamine, N-methylacetamide, formamide, 3-amino-1, 2-propanediol, 2,2-thiodiethanol, 3,3-thiodipropanol, tetramethylene sulfone, butadiene sulfone, ethylene carbonate, butyrolacetone, tetrahydrofurfuryl alcohol, glycerol, 1,2,4-butenetriol, trimethylpropane, sorbital, pantothenol, Liponic EG-1. Preferred humectants are polyethylene glycol with average molecular weight of 400 to 1000, 2-pyrrolidone 2,2 thiodiethanol, and 1,5 pentanediol. The amount of humectant used can range from 1 to 30 wt%, preferably from 5 to 15 wt%, based on the total weight of the ink. Preferred penetrants are 1,2 $C_1$-$C_4$ alkyl diols, such as 1,2 hexanediol; N-propanol; isopropanol; and hexyl carbitol. The amount of penetrant used can range from 0.1 to 10 wt%, based on the total weight of the ink.

The inkjet ink can be prepared by any method known in the art such as, for example, by mixing, stirring or agitating the ingredients together. The inkjet ink can additionally include such adjuvants as chelating agents, buffers, biocides, fungicides, bactericides, surfactants, anti-curling agents, anti-bleed agents, and surface tension modifies, as desired.

The inkjet ink can be applied to a substrate such as paper, vinyl, and the like using thermal or piezoelectric inkjet ink printers such as, for example, Lexmark 7000, Lexmark 5700, Lexmark Z32, Lexmark Z51, Lexmark Z-65, Lexmark 2050 printers, Epson Stylus 3000, C-82, C-84, Hewlett-Packard DeskJet 550, 570, 694C, 698, 894, 895Ci, and Canon 750. The ink can be allowed to dry at ambient temperature or heated to dry at a higher temperature.

The following examples are illustrative of the invention.

<u>Experimental Methods</u>: The highlighter smear resistance test was measured by rubbing a series of highlighter pens across ink jet applied text patterns and comparing the degree of smearing to visual standard samples in a ranking system. Printing reliability was measured by the number of firing print head nozzles out of a total of 208 nozzles after printing 90 pages on a Lexmark desktop printer; values were the mean of 6 trials.

The weight average particle diameter herein is that determined by CHDF using a Matec model-2000 CHDF measurement system with a C-202 cartridge and GR-500 (2X) eluant (diluted 1/20). The CHDF instrument was calibrated with nominal 50, 100, 200, 300, 400, 500, 600, and 700 nm polystyrene column standards ("Nanosphere ™"standards from Duke Scientific Corp., Palo Alto, CA, USA) using the "new sigmoid fit" procedure (Matec CHDF-2000 software, version 3.20). Particle sizes were calculated using the deconvolution calculation for maximum resolution. The "DLS" volume average particle diameter herein is that measured by dynamic light scattering using a Microtrac model # UPA-150 instrument (Microtrac Industries, Northborough, MA, USA).

Glass transition temperatures were measured by Differential Scanning Calorimetry with a model Q-1000 DSC instrument (TA Instruments, New Castle, DE, USA) at a temperature ramp rate of 20°C/minute (after pre heating the sample to 150°C for 5 min) on a 16mg sample in a nitrogen atmosphere, using "Universal Analysis" software (version 4.0.0) to calculate the midpoint of the transition.

The weight average molecular weight ("Mw")of the polymer of the inkjet ink binder herein was that determined by gel permeation chromatography (GPC) with a Waters 410 RI model GPC instrument (Waters Associates, Milford, MA, USA) at 40C and a flow rate of 1.00 cc/min in THF solution, using a PLgel 5um Mixed-C column and PLgel 10um Mixed-B column, calibrated with narrow distribution pSTY standards converted to pMMA, using a refractive index detector.

MWs are presented in Daltons.

All ranges disclosed herein are inclusive and the minimums and maximums of the nested ranges are combinable.

Abbreviations used herein:

NaPS      = sodium persulfate
KDDBS     = potassium n-dodecyl benzenesulfonate (29% solids)
MMA       = methyl methacrylate
MAA       = methacrylic acid
BA =      butyl acrylate
2EHA      = 2-ethylhexyl acrylate
DI water  = deionized water

COMPARATIVE EXAMPLE A. Preparation of inkjet ink binder.

After heating a reaction vessel containing 250 g deionized, buffered water (0.558 meq buffer/g water) and 0.39 g KDDBS to 88°C, 6% of a mixture of 280 g water, 3.45 g KDDBS, 191 g MMA, 90 g BA, 269 g 2EHA, and 27.5 g MAA was added, followed by 2.3 g NaPS. This combination was held at 88°C for 10 min. Then, the remaining monomer mix was added over a period of 70 min. After the monomer addition was completed, the vessel was held at 88°C for 35 min and then cooled to 70°C and held for 15 min, then cooled to 50°C followed by the addition of 821g DI water. The mixture was further cooled to 30°C and adjusted to a pH of 8.5-9.0 with 4% KOH. The product was then filtered through 100 and 325 mesh screens to give the final sample. The % solids level of the sample was 24.8%, the particle size was 304nm (wt. Ave, CHDF), and 392nm (vol. Ave, DLS), the Tg was -13°C (DSC) and Mw was 477,000.

COMPARATIVE EXAMPLE B. Preparation of inkjet ink binder

A reaction vessel containing 250 ml deionized, buffered water (0.558 meq buffer/g water) and 0.39 g KDDBS was heated to 88°C, then 6% of a mixture of 280 g water, 3.45 g KDDBS, 191 g MMA, 90 g BA, 269 g 2EHA, 27.5 g MAA, and 1.18 g 3-mercapto butylpropionate was added followed by 2.3 g NaPS. This combination was held at 88°C for 10 min. Then, the remaining monomer mix was added over a period of 70 min. After the monomer addition was completed, the vessel was held at 88°C for 35 min and then cooled to 70°C and held for 15 min, then cooled to 50°C followed by the addition of 825g of deionized water. The mixture was further cooled to 30°C and neutralized to a pH of 8.5-9.0 with 4% KOH. The product was then filtered through 100 and 325 mesh screens to give the final sample. The % solids level of the sample was 25.0%, the average particle size was 288nm (wt. Ave, CHDF), and 403nm (vol. Ave, DLS), the Tg was - 10°C (DSC) and Mw was 185,000.

EXAMPLE 1. Preparation of inkjet ink binder.

A reaction vessel containing 250 ml deionized, buffered water (0.558 meq buffer/g water) and 0.39 g KDDBS was heated to 88°C, then 6% of a mixture of 280 g water, 3.45 g KDDBS, 191 g MMA, 90 g BA, 269 g 2EHA, 27.5 g MAA, and 2.35 g 3-mercapto butylpropionate was added followed by 2.3 g NaPS. This combination was held at 88°C for 10 min. Then, the remaining monomer mix was added over a period of 70 min. After the monomer addition was completed, the vessel was held at 88°C for 35 min and then cooled to 70°C and held for 15 min, then cooled to 50°C followed by the addition of 828g DI water. The mixture was further cooled to 30°C and adjusted to a pH of 8.5-9.0 with 4% KOH. The product was then filtered through 100 and 325 mesh screens to give the final sample. The % solids level of the sample was 25.0%, the average particle size was 287nm (wt. Ave, CHDF), and 366nm (vol. Ave, DLS), the Tg was -15°C (DSC) and Mw was 89,200.

EXAMPLE 2. Preparation of inkjet ink binder

A reaction vessel containing 250 ml deionized, buffered water (0.558 meq buffer/g water) and 0.39 g KDDBS was heated to 88°C, then 6% of a mixture of 280 g water, 3.45 g KDDBS, 191 g MMA, 90 g BA, 269 g 2EHA, 27.5 g MAA, and 3.52 g 3-mercapto butylpropionate was added followed by 2.3 g NaPS. This combination was held at 88°C for 10 min. Then, the remaining monomer mix was added over a period of 70 min. After the monomer addition was completed, the vessel was held at 88°C for 35 min and then cooled to 70°C and held for 15 min, then cooled to 50°C followed by the addition of 83 1 g DI water. The mixture was further cooled to 30°C and adjusted to a pH of 8.5-9.0 with 4% KOH. The product was then filtered through 100 and 325 mesh screens to give the final sample. The % solids level of the sample was 25.4%, the average particle size was 266nm (wt. Ave, CHDF), and 350nm (vol. Ave, DLS), the Tg was -17°C (DSC) and Mw was 73,000.

EXAMPLE 3. Preparation of inkjet in binder

A reaction vessel containing 250 ml deionized, buffered water (0.558 meq buffer/g water) and 0.39 g KDDBS was heated to 88°C, then 6% of a mixture of 280 g water, 3.45 g KDDBS, 191 g MMA, 90 g BA, 269 g 2EHA, 27.5 g MAA, and 4.69 g 3-mercapto butylpropionate was added followed by 2.3 g NaPS. This combination was held at 88°C for 10 min. Then, the remaining monomer mix was added over a period of 70 min. After the monomer addition was completed, the vessel was held at 88°C for 35 min and then cooled to 70°C and held for 15 min, then cooled to 50°C followed by the addition of 831 g DI water. The mixture was further cooled to 30°C and adjusted to a pH of 8.5-9.0 with 4% KOH. The product was then filtered through 100 and 325 mesh screens to give the final sample. The % solids level of the sample was 25.0%, the average particle size was 312nm (wt. Ave, CHDF), and 421nm (vol. Ave, DLS), the Tg was - 18°C (DSC) and Mw was 65,200.

EXAMPLE 4. Preparation of inkjet ink binder

A reaction vessel containing 250 ml deionized, buffered water (0.558 meq buffer/g water) and 0.39 g KDDBS was heated to 88°C, then 6% of a mixture of 280 g water, 3.45 g KDDBS, 191 g MMA, 90 g BA, 269 g 2EHA, 27.5 g MAA, and 8.21 g 3-mercapto butylpropionate was added followed by 2.3 g NaPS. This combination was held at 88°C for 10 min. Then, the remaining monomer mix was added over a period of 70 min. After the monomer addition was completed, the vessel was held at 88°C for 35 min and then cooled to 70°C and held for 15 min, then cooled to 50°C followed by the addition of 845g DI water. The mixture was further cooled to 30°C and adjusted to a pH of 8.5-9.0 with 4% KOH. The product was then filtered through 100 and 325 mesh screens to give the final sample. The % solids level of the sample was 25.1 %, the average particle size was 282nm (wt. Ave, CHDF), and 403nm (vol. Ave, DLS), the Tg was - 22°C (DSC) and the Mw was 25,300.

EXAMPLE 5. Preparation of inkjet ink binder.

A reaction vessel containing 250 ml deionized, buffered water (0.558 meq buffer/g water) and 0.39 g KDDBS was heated to 88°C, then 6% of a mixture of 280 g water, 3.45 g KDDBS, 191 g MMA, 90 g BA, 269 g 2EHA, 27.5 g MAA, and 11.7 g 3-mercapto butylpropionate was added followed by 2.3 g NaPS. This combination was held at 88°C for 10 min. Then, the remaining monomer mix was added over a period of 70 min. After the monomer addition was completed, the vessel was held at 88°C for 35 minutes and then cooled to 70°C and held for 15 min, then cooled to 50°C followed by the addition of 855g DI water. The mixture was further cooled to 30°C and adjusted to a pH of 8.5-9.0 with 4% KOH. The product was then filtered through 100 and 325 mesh screens to give the final sample. The % solids level of the sample was 25.0%, the average particle size was 314nm (wt. Ave, CHDF), and 404nm (vol. Ave, DLS), the Tg was - 22°C (DSC) and Mw was 25,700.

EXAMPLE 6. Preparation and evaluation of inkjet inks.

The following inkjet ink was made with the designated inkjet ink binders and evaluated with the results presented in Table 6.1

Ink Composition:

4% colorant (self-dispersed carbon black)
5% inkjet ink binder (listed below)
7.5% polyethylene glycol 400
7.5% 2-pyrrolidone
1.2% 1,2-hexanediol
0.4% hexyl carbitol
DI water

Table 6.1. Evaluation of Inkjet Inks

| Ink Binder of Example No. | Mw / Mn (x1000) | Print Reliability | Highlighter Resistance |
|---|---|---|---|
| Comp. A | 477/42.0 | 206 | Good |
| Comp B | 185/32.5 | 65 | Good + |
| 1 | 89.2/23.3 | 88 | Good + |
| 2 | 73.0/19.5 | 129 | Good + |
| 3 | 65.2/14.8 | 155 | Good + |
| 4 | 25.3/8.92 | 191 | Good + |
| 5 | 25.7/8.00 | 205 | Good + |

Inkjet inks including the inkjet ink binders of Examples 1-5 of the present invention exhibit both higher print reliability and higher highlighter resistance relative to the corresponding inks including the binders of Comparative Examples A-B, that is especially at the high binder loadings (i.e. 5%).

**Claims**

1. An inkjet ink binder comprising an aqueous dispersion of polymer particles, said polymer comprising as polymerized units from 1 to 20 wt.% ethylenically unsaturated hydrophilic monomer, based on polymer weight, said polymer having a weight average molecular weight of no more than 50,000 Daltons, and said polymer having a glass transition temperature (Tg) in the range of from -40°C to 120°C.

2. The inkjet ink binder of claim 1 wherein said polymer has a weight average molecular weight of from 1000 to 30,000 Daltons.

3. The inkjet ink binder of claim 1 wherein said polymer particles have a volume average particle diameter as measured by dynamic light scattering (DLS) of at least 35 nanometers greater than the weight average particle diameter as measured by capillary hydro-dynamic fractionation (CHDF).

4. The inkjet ink binder of claim 1 wherein said polymer particles have a volume average particle diameter as measured by DLS of at least 55 nanometers greater than the weight average particle diameter as measured by CHDF.

5. The inkjet ink binder of claim 1 wherein the ethylenically unsaturated hydrophilic monomer is a monoethylenically unsaturated acid monomer.

6. The inkjet ink binder of claim 5 wherein said polymer particles have been formed by emulsion polymerization in the presence of a neutralizer in the amount of from 15 to 75%, on an equivalents basis, based on said monoethylenically unsaturated acid monomer.

7. The inkjet ink binder of claim 6 wherein said neutralizer is a hard base.

8. The inkjet ink binder of claim 1 wherein said polymer particles have a weight average particle diameter of from 100 to 450 nanometers.

European Patent
Office

**EUROPEAN SEARCH REPORT**

Application Number

EP 06 25 0324

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 541 590 B1 (JOHNSON ERIC ALVIN ET AL) 1 April 2003 (2003-04-01) * the whole document * | 1-8 | INV. C09D11/00 C08F20/00 |
| X | EP 1 108 760 A (ROHM AND HAAS COMPANY) 20 June 2001 (2001-06-20) * the whole document * | 1-8 | |
| X | US 2004/123773 A1 (BUTLER SUSAN ET AL) 1 July 2004 (2004-07-01) * paragraph [0090]; examples * | 1-8 | |
| X | US 2004/063809 A1 (FU ZHENWEN ET AL) 1 April 2004 (2004-04-01) * examples * | 1-8 | |
| X | EP 0 882 771 A (XEROX CORPORATION) 9 December 1998 (1998-12-09) * example IV * | 1-8 | |
| X | EP 0 869 160 A (XEROX CORPORATION) 7 October 1998 (1998-10-07) * page 5, line 20 - line 21; examples * | 1-8 | TECHNICAL FIELDS SEARCHED (IPC) C09D C08F |
| X | EP 0 851 014 A (E.I. DU PONT DE NEMOURS AND COMPANY) 1 July 1998 (1998-07-01) * examples * | 1-8 | |
| X | PATENT ABSTRACTS OF JAPAN vol. 1995, no. 04, 31 May 1995 (1995-05-31) & JP 07 026188 A (JAPAN SMALL CORP), 27 January 1995 (1995-01-27) * abstract * | 1-8 | |

-/--

The present search report has been drawn up for all claims

| Place of search | Date of completion of the search | Examiner |
|---|---|---|
| Munich | 27 April 2006 | Schmitz, V |

EPO FORM 1503 03.82 (P04C01)

**European Patent Office**

**EUROPEAN SEARCH REPORT**

Application Number

EP 06 25 0324

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PATENT ABSTRACTS OF JAPAN vol. 1996, no. 04, 30 April 1996 (1996-04-30) & JP 07 333847 A (MITSUBISHI CHEM CORP), 22 December 1995 (1995-12-22) * abstract * ----- | 1-8 | |
| | | | TECHNICAL FIELDS SEARCHED (IPC) |

The present search report has been drawn up for all claims

| Place of search | Date of completion of the search | Examiner |
|---|---|---|
| Munich | 27 April 2006 | Schmitz, V |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

# EP 1 683 843 A1

## ANNEX TO THE EUROPEAN SEARCH REPORT
## ON EUROPEAN PATENT APPLICATION NO.

EP 06 25 0324

This annex lists the patent family members relating to the patent documents cited in the above-mentioned European search report.
The members are as contained in the European Patent Office EDP file on
The European Patent Office is in no way liable for these particulars which are merely given for the purpose of information.

27-04-2006

| Patent document cited in search report | | Publication date | Patent family member(s) | | Publication date |
|---|---|---|---|---|---|
| US 6541590 | B1 | 01-04-2003 | US | 2003171516 A1 | 11-09-2003 |
| | | | US | 2003171517 A1 | 11-09-2003 |
| EP 1108760 | A | 20-06-2001 | JP | 2001240619 A | 04-09-2001 |
| US 2004123773 | A1 | 01-07-2004 | NONE | | |
| US 2004063809 | A1 | 01-04-2004 | NONE | | |
| EP 0882771 | A | 09-12-1998 | JP | 10338826 A | 22-12-1998 |
| | | | US | 6329446 B1 | 11-12-2001 |
| EP 0869160 | A | 07-10-1998 | CA | 2229253 A1 | 30-09-1998 |
| | | | JP | 10279870 A | 20-10-1998 |
| EP 0851014 | A | 01-07-1998 | DE | 69713728 D1 | 08-08-2002 |
| | | | DE | 69713728 T2 | 06-02-2003 |
| | | | JP | 3069543 B2 | 24-07-2000 |
| | | | JP | 10195352 A | 28-07-1998 |
| | | | US | 6232369 B1 | 15-05-2001 |
| JP 07026188 | A | 27-01-1995 | JP | 2642037 B2 | 20-08-1997 |
| JP 07333847 | A | 22-12-1995 | NONE | | |

EPO FORM P0459

For more details about this annex : see Official Journal of the European Patent Office, No. 12/82

11